# FASCICULE DE BREVET EUROPEEN

(11) **EP 1 342 645 B1**
(45) Date de publication et mention de la délivrance du brevet: **20.04.2005**
(21) Numéro de dépôt: 03290433.6
(22) Date de dépôt: 24.02.2003
(51) Int. Cl.: B62D 5/30, B64C 25/50

(54) **Architecture de système hydraulique de commande d'orientation**
Hydraulische Lenkvorrichtung
Hydraulic steering system

(30) Priorité: 04.03.2002 FR 0202693
(43) Date de publication de la demande: 10.09.2003
(73) Titulaire: Messier-Bugatti, 78140 Velizy Villacoublay (FR)
(72) Inventeur: Collet, Olivier, 91120 Palaiseau (FR); Dorget, Emmanuel, 92800 Puteaux (FR); Patrigeon, Claire, 91570 Bievres (FR); Bucheton, Daniel, 78150 Le Chesnay (FR)
(74) Mandataire: Jaunez, Xavier

(56) Documents cités:
- WO-A-01/19664
- WO-A-02/12052
- DE-A- 10 037 829
- DE-A- 10 040 870
- GB-A- 1 394 808
- US-A- 2 874 793

## Description

### DOMAINE DE L'INVENTION

L'invention concerne une architecture de système hydraulique de commande d'orientation, notamment destiné à équiper un aéronef.

### ARRIERE-PLAN DE L'INVENTION

Les aéronefs comprennent en général un atterrisseur auxiliaire dont la ou les roues sont orientables afin de permettre la manoeuvre de l'aéronef au sol. Pour les aéronefs de grande taille, il est parfois prévu un ou plusieurs bogies orientables sur les atterrisseurs principaux, en complément du dispositif d'orientation de l'atterrisseur auxiliaire.

Les parties orientables sont en général actionnées par un ou plusieurs vérins hydrauliques qui sont alimentés par le dispositif de génération de pression de l'aéronef via un bloc hydraulique d'orientation situé à proximité des vérins, le plus souvent directement sur l'atterrisseur. De façon connue en soi, le bloc hydraulique d'orientation comprend un distributeur, en général de type proportionnel, permettant de distribuer le fluide vers le ou les vérins de façon à commander l'orientation de la partie orientable de l'atterrisseur en fonction des ordres du pilote.

La fonction d'orientation n'est en général pas considérée comme critique du point de vue de la sécurité de l'aéronef. En effet, sa perte n'entraîne pas de conséquences catastrophiques, et la fonction d'orientation peut être compensée par un freinage différentiel associé ou non à une poussée différentielle des moteurs. Si besoin, l'aéronef peut être remorqué.

Il est donc courant que le bloc hydraulique d'orientation ne soit alimenté que par le seul circuit hydraulique principal de l'aéronef, le bloc hydraulique étant agencé pour permettre la libre rotation de la partie orientable de l'atterrisseur en cas de panne d'alimentation

Cependant, la perte de la fonction d'orientation peut gêner de façon importante l'exploitation de l'aéronef. En effet, les manoeuvres de l'aéronef par freinage différentiel ne permettent pas des virages à grand rayon de courbure, ce qui n'est pas forcément compatible avec la largeur de piste disponible. Par ailleurs, les virages serrés effectués par blocage des roues d'une atterrisseur principale sollicitent fortement ledit atterrisseur en torsion, ce qui nuit à sa durée de vie. En outre, la mobilisation d'un tracteur et le remorquage de l'aéronef peut prendre beaucoup de temps et perturber de façon inacceptable l'exploitation de l'aéroport.

Selon une technique classique, l'augmentation de la fiabilité de la fonction d'orientation peut être obtenue au moyen du doublement du circuit d'alimentation principal par un circuit d'alimentation secours.

Mais cette solution appliquée au cas d'espèce présente de nombreux inconvénients. Sur les aéronefs gros porteurs, le bloc hydraulique d'orientation de l'atterrisseur auxiliaire est éloigné de la génération de l'aéronef d'une distance de plusieurs dizaines de mètres, ce qui rend cette solution lourde. Par ailleurs, des impératifs de ségrégation obligent à un cheminement différent des circuits principal et secours dans la structure de l'aéronef, ce qui complique la conception de l'aéronef.

En outre, la panne peut provenir du bloc hydraulique lui-même, et notamment du distributeur. Le doublement du circuit d'alimentation selon la technique classique ne permet pas de remédier à cette panne.

L'état de la technique est également illustré par les documents WO-A-02 12052, WO-A-01 19664, GB-A-1 394 808, US-A-2 874 793, DE-A-100 37 829 et DE-A-100 40 870.

L'état de la technique le plus proche est illustré par le document WO-A-02 12052. Ce document décrit une architecture de système hydraulique de commande d'orientation comprenant au moins un vérin de commande d'orientation qui comporte des chambres, ledit système hydraulique comportant un distributeur relié à un dispositif de génération de pression (pompe principale) et à une réserve principale associée, et ledit système hydraulique comportant en outre une électropompe bidirectionnelle à deux ports, conformément au préambule de la revendication 1. Dans cette architecture, le vérin d'orientation est alimenté dans un mode de fonctionnement normal par la pompe principale via le distributeur, et dans un mode dégradé par l'électropompe bidirectionnelle. Les deux modes de fonctionnement peuvent parfaitement coexister, en cas de défaillance du distributeur ou en cas de défaillance des vannes associées à l'électropompe bidirectionnelle, les deux pompes débitant simultanément dans le vérin.On ne dispose donc pas de deux modes de fonctionnement véritablement alternés, mutuellement exclusifs.

Le document WO-A-01 19664 décrit une autre architecture dans laquelle les fonctionnements en mode normal et alterné sont assurés par deux pompes bidirectionnelles. Ainsi, en cas de défaillance, ces deux pompes pourraient là encore débiter toutes deux dans les chambres du vérin.

Le document GB-A-1 394 808 décrit encore une autre architecture dans laquelle les deux modes de fonc-tionnement ne sont alternés qu'en cas de défaillance de la pompe principale, sans pouvoir faire face au cas d'une défaillance d'un autre composant du circuit hydraulique.

Le document US-A-2 874 793 décrit une autre architecture avec des vannes actionnables manuellement pour libérer les parties orientables afin de permettre leur libre rotation.

Le document DE-A-100 37 829 décrit encore une autre architecture avec des électropompes reliées à des circuits respectifs indépendants. Aucun moyen n'est prévu pour la compensation des débits différentiels.

Le document DE-A-100 40 870 décrit enfin une architecture complexe avec deux vérins en série dont chacun possède ses propres moyens d'alimentation.

### OBJET DE L'INVENTION

L'invention vise à permettre une fiabilité optimale de la fonction d'orientation de l'aéronef sans toutefois encourir les inconvénients ou limitations des solutions précitées

### BREVE DESCRIPTION DE L'INVENTION

Ce problème est résolu conformément à l'invention, grâce à une architecture de système hydraulique de commande d'orientation du type précité, dans laquelle le système hydraulique est équipé d'un sélecteur général agencé pour, dans un mode normal de fonctionnement, mettre en communication les chambres du vérin avec le distributeur, et dans un mode alterné de fonctionnement, mettre en communication les chambres du vérin avec les ports de l'électropompe, un dispositif de compensation permettant, dans le mode alterné, de compenser un débit différentiel entre le débit aspiré par l'électropompe d'une des chambres du vérin et le débit refoulé par l'électropompe dans l'autre chambre du vérin.

Ainsi, en cas de panne du dispositif de génération de pression de l'aéronef ou en cas de défaillance du distributeur, l'électropompe prend le relais pour assurer la manoeuvre d'orientation de l'aéronef.

Grâce au système hydraulique selon l'invention, on parvient donc à surmonter non seulement la panne du dispositif de génération, mais également une défaillance du distributeur, sans recourir à un doublement du circuit d'alimentation principal.

Avantageusement, le sélecteur est en outre agencé pour, dans un mode passif, mettre en communication les chambres du vérin entre elles, le dispositif de compensation compensant l'éventuel débit différentiel entre les chambres du vérin lors d'une manoeuvre imposée du vérin.

Le mode passif permet le remorquage de l'aéronef, la partie orientable de l'atterrisseur étant alors libre de tourner sans que le vérin ne s'oppose à sa rotation.

Le dispositif de compensation est utilisé pour compenser à la fois les différences de débit entre les ports de l'électropompe lorsque celle-ci fonctionne, et les différences de débits entre les chambres des vérins dans le mode passif.

Cette disposition permet de se passer d'un accumulateur dédié à la deuxième des compensations évoquées, comme cela se pratique dans l'art antérieur.

Selon un mode particulier de réalisation, le dispositif de compensation comporte un réservoir pressurisé qui est connecté à chacun des ports de la pompe par un clapet anti-retour associé permettant, lors d'un tionnement en mode alterné, le transvasement de fluide hydraulique du réservoir pressurisé vers le port associé, et réciproquement le clapet anti-retour pouvant être mis en position ouverte permanente par un signal de pression pris sur le port opposé de l'électropompe.

Avantageusement encore, le dispositif de compensation comporte en outre des clapets anti-retour reliant chacune des chambres du vérin au réservoir pressurisé pour permettre le transvasement de fluide hydraulique du réservoir pressurisé vers la chambre concernée. Le dispositif de compensation comporte en outre des clapets de surpression reliant le réservoir pressurisé à chacune des chambres du vérin pour permettre un transvasement de fluide hydraulique de la chambre concernée au réservoir pressurisé.

Le réservoir pressurisé est de préférence connecté au dispositif de génération de pression de l'aéronef via un restricteur pour permettre le remplissage du réservoir pressurisé. Celui-ci est en outre avantageusement connecté à la réserve principale via un clapet de surpression.

Selon un aspect de l'invention, une vanne de purge est agencée pour permettre la vidange du réservoir pressurisé dans la réserve principale, afin d'assurer le renouvellement périodique du fluide dudit réservoir.

De préférence enfin, le réservoir pressurisé est équipé d'un capteur de pression.

D'autres caractéristiques et avantages de l'invention apparaîtront plus clairement à la lumière de la description qui suit d'un mode de réalisation particulier non limitatif de l'invention.

### BREVE DESCRIPTION DES DESSINS

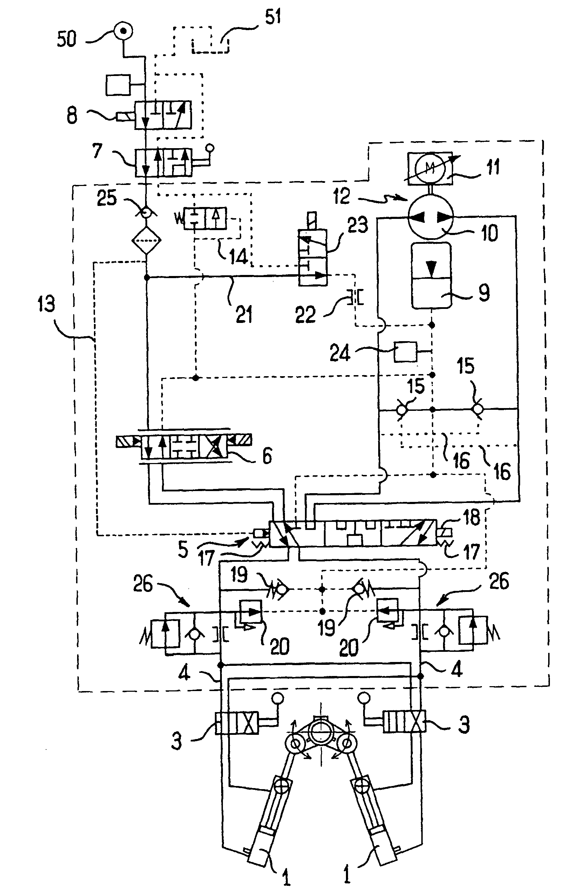

Il sera fait référence à l'unique figure du dessin annexé représentant de façon schématique une architecture de système hydraulique d'orientation selon l'invention associé à un atterrisseur, représenté dans une position correspondant au mode de fonctionnement normal.

### DESCRIPTION DETAILLEE DE L'INVENTION.

En référence à la figure, et de façon connue en soi, la partie orientable de l'atterrisseur (non représentée) est actionnée à l'aide de deux vérins 1 disposés de façon connue en « push-pull ». Dans cette disposition, l'une des parties des vérins (ici le cylindre) est montée rotative sur l'atterrisseur par rapport à un axe parallèle à l'axe de rotation de la partie orientable de l'atterrisseur, l'autre partie des vérins (la tige) étant montée rotative sur la partie orientable de l'atterrisseur selon un axe parallèle aux deux axes précités.

Les deux vérins 1 sont alimentés via des distributeurs rotatifs 3 qui permettent la commutation adéquate de l'alimentation et du retour hydraulique aux chambres du vérin 1 associé lorsque celui-ci passe par une position où les trois axes sont contenus dans un même plan.

Selon la position angulaire de la partie orientable de l'atterrisseur, les deux vérins 1 peuvent pousser ensemble, tirer ensemble, ou encore travailler de façon différentielle en « push-pull ». Mais quelle que soit la position angulaire, chacune des chambres d'un vérin est reliée à l'une des chambres de l'autre vérin, de sorte que l'on peut considérer que les vérins 1 se comportent du point de vue hydraulique comme un seul vérin double effet.

Les vérins 1 sont alimentés via deux lignes de distribution 4 qui proviennent des sorties d'un distributeur à tiroir 5. Des clapets d'amortissement 26 (dits « anti-shimmy ») équipent chacune des lignes de distribution 4 pour amortir les mouvements d'oscillation que subirait la partie orientable de l'atterrisseur, ceci afin d'éviter tout couplage néfaste de ce mouvement d'oscillation avec des modes propres de l'atterrisseur.

Le distributeur à tiroir 5 possède cinq entrées et comporte trois positions qui définissent trois modes de fonctionnement du système d'orientation, à savoir un mode normal de fonctionnement (illustré ici), un mode passif et un mode alterné de fonctionnement (non illustrés).

Les première et deuxième entrées du distributeur à tiroir 5 sont connectées aux ports de sortie d'un distributeur proportionnel 6, les ports d'entrée du distributeur proportionnel 6 étant quant à eux connectés au dispositif de génération de pression 50 de l'aéronef et à la réserve principale 51 de l'aéronef via successivement un vanne d'isolation à commande mécanique 7 et une vanne d'isolation à commande électrique 8.

La troisième entrée du distributeur à tiroir 5 est reliée à un réservoir pressurisé 9 qui est maintenu à une pression de tarage par un clapet de tarage 14. On notera que le réservoir pressurisé 9 est relié au dispositif de génération de pression 50 de l'aéronef par une dérivation 21 qui permet de maintenir le réservoir pressurisé 9 rempli. Un restricteur 22 placé sur la dérivation 21 permet de limiter le débit du fluide provenant du dispositif de génération de pression 50 de l'aéronef.

Un clapet anti-retour 25, placé en amont de la dérivation 21, permet d'éviter que le réservoir pressurisé 9 ne se vide par la dérivation 21 au cas où la ligne provenant du dispositif de génération de pression 50 de l'aéronef serait rompue. Par ailleurs, une vanne de purge 23 est placée sur la ligne de dérivation 21 pour permettre la vidange du réservoir pressurisé 9 soit au cours d'une opération de maintenance, soit lors de procédures automatiques de vérification du bon fonctionnement du système hydraulique en vol ou au sol. Ceci permet notamment le renouvellement périodique du fluide contenu dans le réservoir pressurisé 9, tout en évitant d'avoir à prévoir l'installation d'un quelconque dispositif de filtration. Un capteur de pression 24 permet de connaître à tout moment la pression régnant dans le réservoir pressurisé 9.

Enfin, les quatrième et cinquième entrée du distributeur à tiroir 5 sont reliés aux deux ports d'une pompe 10 bidirectionnelle à cylindrée fixe entraînée par un moteur électrique à régime variable 11, formant ensemble une électropompe 12.

Le fonctionnement du système hydraulique d'orientation selon l'invention est le suivant.

Lorsque le dispositif de génération de pression 50 de l'aéronef fonctionne normalement, une dérivation 13 (qui se trouve donc sous pression) permet de pousser le distributeur à tiroir 5 dans la position correspondant au mode de fonctionnement normal (tel qu'illustré sur la figure).

Dans cette position, le distributeur à tiroir 5 connecte ses deux sorties à ses deux premières entrées, de sorte que les lignes de distribution 4 sont connectées aux ports de sortie du distributeur proportionnel 6. Celui-ci distribue alors le fluide dans les chambres des vérins 1 en réponse à des ordres du pilote de telle façon que la partie orientable de l'atterrisseur prenne la position angulaire demandée par le pilote.

La troisième entrée du distributeur à tiroir 5 est quant à elle bouchée, tandis que les quatrième et cinquième entrées sont en court-circuit, de sorte que si l'électropompe 12 se met à tourner, soit de façon intentionnelle, soit de façon intempestive, le débit refoulé par l'un des ports est redirigé vers l'autre port de l'électropompe 12.

Pour compenser les éventuelles différences de débit entre les deux ports de l'électropompe 12, le réservoir pressurisé 9 est connecté aux deux ports de l'électropompe 12 via des clapets anti-retour pilotés associés 15 qui permettent le transvasement de fluide vers le réservoir pressurisé 9 si le débit aspiré par la pompe est inférieur au débit refoulé par le vérin.

Par ailleurs, les clapets anti-retour 15 sont chacun commandés par un signal de pression 16 pris sur l'autre port, qui force le clapet 15 concerné à rester ouvert de façon à permettre le transvasement d'un trop-plein dans le réservoir pressurisé 9.

Lorsque le dispositif de génération de pression 50 de l'aéronef est arrêté, des ressorts 17 de centrage ramènent le distributeur à tiroir 5 dans la position de mode passif (qui correspond à la case centrale du distributeur à tiroir 5 sur la figure).

Dans ce mode, les première et deuxième entrées du distributeur à tiroir 5 sont en court-circuit, de sorte que l'actionnement intentionnel ou intempestif du distributeur proportionnel 6 est inopérant sur les vérins 1.

Les quatrième et cinquième entrées du distributeur à tiroir 5 sont également en court-circuit, de la même façon que dans le mode de fonctionnement normal, de sorte que l'actionnement de l'électropompe 12 est également inopérant sur les vérins 1.

Quant à la troisième entrée, elle est en communication avec les deux sorties du distributeur à tiroir 5 de sorte que les chambres de chacun des vérins 1 sont reliées entre elles et avec le réservoir pressurisé 9.

Ainsi, lors d'un remorquage de l'aéronef, la partie orientable de l'atterrisseur peut tourner librement, le fluide contenu dans l'une des chambre des vérins 1 étant transvasé dans les autres chambres ou dans le réservoir pressurisé 9, sans qu'aucune résistance ne soit opposée à la rotation de la partie orientable de l'atterrisseur.

Enfin, si en cours de fonctionnement, une panne du dispositif de génération 50 de l'aéronef ou une défaillance du distributeur proportionnel 6 est détectée, le distributeur à tiroir 5 est forcé au moyen d'une bobine 18 dans la troisième position correspondant au mode de fonctionnement alterné (qui correspond à la case de droite du distributeur à tiroir 5 sur la figure), la bobine 18 étant assez puissante pour contrer l'action d'une éventuelle pression résiduelle dans la dérivation 13.

Dans ce mode, les première et deuxième entrées du distributeur à tiroir 5 sont bouchées, de sorte que l'actionnement du distributeur proportionnel 6 est inopérant sur les vérins 1.

La troisième entrée du distributeur à tiroir 5 est également bouchée, tandis que les quatrième et cinquième entrées du distributeur à tiroir 5 mettent en communication les ports de l'électropompe 12 avec les lignes de distribution 4 des vérins 1.

La manoeuvre de la partie orientable de l'atterrisseur sera alors obtenue en faisant tourner l'électropompe 12 dans le sens souhaité afin d'injecter du fluide par le port adéquat dans l'une des lignes de distribution 4, le fluide éjecté par l'autre ligne de distribution 4 étant dirigé vers l'autre port de l'électropompe 12. Le réservoir pressurisé 12 joue alors le rôle d'une capacité qui absorbe ou fournit le débit différentiel entre les ports de l'électropompe 12. Dans le mode alterné, le fluide hydraulique circule donc en circuit fermé.

On est ainsi parvenu à fournir un moyen d'assurer la fonction d'orientation en cas de panne du dispositif de génération de pression 50 de l'aéronef, ainsi qu'en cas de défaillance du distributeur proportionnel 6, ceci sans avoir recours à un circuit de secours qui doublerait le circuit principal.

Selon un autre aspect de l'invention, le réservoir pressurisé 9 est relié à chacune des lignes de distribution 4 par des clapets anti-retour 19 qui permettent le transvasement d'une certaine quantité de fluide du réservoir pressurisé 9 vers la ou les chambres des vérins 1 concernés, pour le cas où la pression dans lesdites chambres viendrait à tomber sous la pression de tarage du réservoir pressurisé 9. Cette disposition évite la cavitation dans les chambres des vérins 1.

Par ailleurs, le réservoir pressurisé 9 est relié à chacune des lignes de distribution 4 par des clapets de surpression 20 qui permettent la décharge dans le réservoir pressurisé 9 d'une certaine quantité de fluide en cas de dépassement dans les chambres des vérins 1 concernées de la pression de réglage des clapets de surpression 20. Cette disposition protège les vérins 1 contre les surpressions.

Ainsi, le réservoir pressurisé 9 est utilisé non seulement pour jouer le rôle d'une capacité apte à absorber ou fournir le débit différentiel aux ports de l'électropompe 12, mais également à fournir ou absorber les débits nécessaires pour protéger les vérins 1 de la cavitation et des surpressions.

L'invention n'est pas limitée au mode particulier de réalisation qui vient d'être décrit, mais bien au contraire entend couvrir toute variante qui entre dans le cadre de l'invention tel que défini par les revendications.

En particulier, bien que l'on ait indiqué que le distributeur utilisé était du type proportionnel, on pourra envisager également tout type de distributeur permettant de contrôler le débit de fluide dans les chambres des vérins d'orientation, et notamment des dispositifs de distribution dits « bang-bang » ou équivalent.

Bien que l'on ait illustré l'architecture de système hydraulique d'orientation selon l'invention comme étant appliquée à un dispositif d'actionnement de la partie orientable d'un atterrisseur qui est composée de vérins d'orientation montés en « push-pull », l'invention s'applique également à un dispositif d'actionnement de type à crémaillère actionnée par deux pistons terminaux coulissant chacun dans une chambre, ou encore à un dispositif d'actionnement de type à un seul vérin, ou encore à moteur hydraulique rotatif ou tout type d'actionnement équivalent.

Bien que le sélecteur général illustré ici soit un distributeur à tiroir à trois positions avec cinq entrées et deux sorties, on pourra naturellement remplacer ce distributeur à tiroir par un arrangement de plusieurs vannes, permettant les mêmes commutations que le distributeur à tiroir illustré ici.

Enfin, bien que le dispositif de compensation ait été illustré ici comme comprenant un réservoir pressurisé gonflé par le dispositif de génération de pression, on pourra également prévoir un réservoir isolé.

## Revendications

1. Architecture de système hydraulique de commande d'orientation comprenant au moins un vérin (1) de commande d'orientation qui comporte des chambres, ledit système hydraulique comportant un distributeur (6) relié à un dispositif de génération de pression (50) et à une réserve principale (51) associée, et ledit système hydraulique comportant en outre une électropompe (12) bidirectionnelle à deux ports, **caractérisé en ce que** le système hydraulique est équipé d'un sélecteur général (5) agencé pour, dans un mode normal de fonctionnement, mettre en communication les chambres du vérin (1) avec le distributeur (6), et dans un mode alterné de fonctionnement, mettre en communication les chambres du vérin (1) avec les ports de l'électropompe (12), un dispositif de compensation (9,15,19,20) permettant, dans le mode alterné, de compenser un débit différentiel entre le débit aspiré par l'électropompe (12) d'une des chambres du vérin (1) et le débit refoulé par l'électropompe (12) dans l'autre chambre du vérin (1).

2. Architecture selon la revendication 1, **caractérisée en ce que** le sélecteur général (5) est en outre agencé pour, dans un mode passif de remorquage, mettre en communication les chambres du vérin (1) entre elles, le dispositif de compensation (9) compensant l'éventuel débit différentiel entre les chambres du vérin (1) lors d'une manoeuvre imposée du vérin (1).

3. Architecture selon la revendication 1 ou la revendication 2, **caractérisée en ce que** le dispositif de compensation comporte un réservoir pressurisé (9) qui est connecté à chacun des ports de l'électropompe (12) par un clapet anti-retour associé (15) permettant, lors d'un fonctionnement en mode alterné, le transvasement de fluide hydraulique du réservoir pressurisé (9) vers l'un des ports de l'électropompe (12) et réciproquement, chaque clapet anti-retour (15) pouvant être mis en position ouverte permanente par un signal de pression pris sur le port opposé de l'électropompe (12).

4. Architecture selon la revendication 3, **caractérisée en ce que** le dispositif de compensation comporte en outre des clapets anti-retour (19) reliant chacune des chambres du vérin (1) au réservoir pressurisé (9) pour permettre le transvasement de fluide hydraulique du réservoir pressurisé (9) vers la chambre du vérin (1) concernée.

5. Architecture selon la revendication 3 ou la revendication 4, **caractérisée en ce que** le dispositif de compensation comporte en outre des clapets de surpression (20) reliant le réservoir pressurisé (9) à chacune des chambres du vérin (1) pour permettre un transvasement de fluide hydraulique de la chambre concernée au réservoir pressurisé (9).

6. Architecture selon l'une des revendications 3 à 5, **caractérisée en ce que** le réservoir pressurisé (9) est connecté au dispositif de génération de pression (50) via un restricteur (22) pour permettre le remplissage du réservoir pressurisé (9).

7. Architecture selon l'une des revendications 3 à 6, **caractérisée en ce que** le réservoir pressurisé (9) est connecté à la réserve principale (51) via un clapet de surpression (14).

8. Architecture selon l'une des revendications 3 à 7, **caractérisé en ce qu'**une vanne de purge (23) est agencée pour permettre la vidange du réservoir pressurisé (9) dans la réserve principale (51), afin d'assurer le renouvellement périodique du fluide dudit réservoir.

9. Architecture selon l'une des revendications 3 à 8, **caractérisé en ce que** le réservoir pressurisé (9) est équipé d'un capteur de pression (24).

## Patentansprüche

1. Hydraulisches Lenksystem, umfassend mindestens einen Lenkzylinder (1), der Kammern hat, wobei das hydraulische System einen Verteiler (6) umfasst, der mit einer Druckerzeugungsvorrichtung (50) und mit einem damit verbundenen Haupttank (51) verbunden ist, und wobei das hydraulische System ferner eine bidirektionale Elektropumpe (12) mit zwei Öffnungen umfasst, **dadurch gekennzeichnet, dass** das hydraulische System mit einem Hauptselektor (5) ausgestattet ist, der derart ausgebildet ist, dass er in einem normalen Betriebsmodus die Kammern des Lenkzylinders (1) mit dem Verteiler (6) verbindet, und in einem alternativen Betriebsmodus die Kammern des Lenkzylinders (1) mit den Öffnungen der Elektropumpe (12) verbindet, wobei eine Ausgleichsvorrichtung (9, 15, 19, 20) in dem alternativen Modus den Ausgleich einer Unterschiedsmenge zwischen der durch die Elektropumpe (12) aus einer der Kammern des Lenkzylinders (1) angesaugten Menge und der durch die Elektropumpe (12) in die andere Kammer des Lenkzylinders (1) geförderten Menge ermöglicht.

2. Hydraulisches Lenksystem nach Anspruch 1, **dadurch gekennzeichnet, dass** der Hauptselektor (5) ferner derart ausgebildet ist, dass er in einem passiven Schleppmodus die Kammern des Lenkzylinders (1) miteinander verbindet, wobei die Ausgleichsvorrichtung (9) die etwaige Unterschiedsmenge zwischen den Kammern des Lenkzylinders (1) bei einer erzwungenen Betätigung des Lenkzylinders (1) ausgleicht.

3. Hydraulisches Lenksystem nach Anspruch 1 oder Anspruch 2, **dadurch gekennzeichnet, dass** die Ausgleichsvorrichtung einen Druckspeicher (9) umfasst, der mit jeder der Öffnungen der Elektropumpe (12) über ein dazugehöriges Rückschlagventil (15) verbunden ist, das bei einem Betrieb im alternativen Modus das Umfüllen von Hydraulikfluid aus dem Druckspeicher (9) in Richtung einer der Öffnungen der Elektropumpe (12) und umgekehrt ermöglicht, wobei jedes Rückschlagventil (15) durch ein Drucksignal, das an der anderen Öffnung der Elektropumpe (12) abgegriffen wird, in eine Daueroffenstellung gebracht werden kann.

4. Hydraulisches Lenksystem nach Anspruch 3, **dadurch gekennzeichnet, dass** die Ausgleichsvorrichtung ferner Rückschlagventile (19) umfasst, die jeweils die Kammern des Lenkzylinders (1) mit dem Druckspeicher (9) verbinden, um das Umfüllen von Hydraulikfluid aus dem Druckspeicher (9) in Richtung der betreffenden Kammer des Lenkzylinders (1) zu gestatten.

5. Hydraulisches Lenksystem nach Anspruch 3 oder Anspruch 4, **dadurch gekennzeichnet, dass** die Ausgleichsvorrichtung ferner Überdruckventile (20) umfasst, die den Druckspeicher (9) mit jeder der Kammern des Lenkzylinders (1) verbinden, um ein Umfüllen von Hydraulikfluid aus der betreffenden Kammer in den Druckspeicher (9) zu gestatten.

6. Hydraulisches Lenksystem nach einem der Ansprüche 3 bis 5, **dadurch gekennzeichnet, dass** der Druckspeicher (9) mit der Druckerzeugungsvorrichtung (50) über eine Drossel (22) verbunden ist, um die Befüllung des Druckspeichers (9) zu gestatten.

7. Hydraulisches Lenksystem nach einem der Ansprüche 3 bis 6, **dadurch ge-kennzeichnet, dass** der Druckspeicher (9) mit dem Haupttank (51) über ein Überdruckventil (14) verbunden ist.

8. Hydraulisches Lenksystem nach einem der Ansprüche 3 bis 7, **dadurch gekennzeichnet, dass** ein Entlüftungsventil (23) derart ausgebildet ist, dass es die Entleerung des Druckspeichers (9) in den Haupttank (51) gestattet, um die regelmäßige Erneuerung des Fluids dieses Speichers zu gewährleisten.

9. Hydraulisches Lenksystem nach eine der Ansprüche 3 bis 8, **dadurch gekennzeichnet, dass** der Druckspeicher (9) mit einem Drucksensor (24) ausgestattet ist.

## Claims

1. An architecture for a hydraulic steering control system that includes at least one steering control actuator (1) having chambers, the said hydraulic system comprising a directional-control valve (6) connected to a pressure-generator device (50) and an associated main supply (51), and the said hydraulic system further comprising a reversible electrically-driven pump unit (12) having two ports, the architecture being the hydraulic system is fitted with a general selector (5) arranged in a normal mode of operation;to put the chambers of the actuator (1) into communication with the directional-control valve (6), and in an alternate mode of operation to put the chambers of the actuator (1) into communication with the ports of the pump unit (12), a compensation device (9, 15, 19, 20) making it possible in the alternate mode to compensate for the flow differential between the flow taken in by the pump unit (12) from one of the chambers of the actuator (1) and the flow delivered by the pump unit (12) to the other chamber of the actuator (1).

2. An architecture according to claim 1, **characterized in that** the general selector (5) is further arranged, in a passive, towing mode, to put the chambers of the actuator (1) into communication with one another, the compensation device (9) then compensating for any possible flow differential between the chambers of the actuator (1) in the event of a maneuver being imposed on the actuator (1).

3. An architecture according to claim 1 or claim 2, **characterized in that** the compensation device comprises a pressurized tank (9) connected to each of the ports of the pump unit (12) via an associated check valve (15) making it possible during alternate mode operation for hydraulic fluid to be transferred from the pressurized tank (9) to one of the ports of the pump unit (12), and vice versa, each check valve (15) being capable of being placed in a permanently open position by a respective pressure signal taken from the opposite port of the pump unit (12).

4. An architecture according to claim 3, **characterized in that** the compensation device further comprises check valves (19) connecting each of the chambers of the actuator (1) to the pressurized tank (9) to enable hydraulic fluid to be transferred from the pressurized tank (9) to the chamber of the actuator (1) concerned.

5. An architecture according to claim 3 or claim 4, **characterized in that** the compensation device further comprises pressure-relief valves (20) connecting the pressurized tank (9) to each of the chambers of the actuator (1) to enable hydraulic fluid to be transferred from the chamber concerned to the pressurized tank (9).

6. An architecture according to any one of claims 3 to 5, **characterized in that** the pressurized tank (9) is connected to the pressure-generator device (50) via a constriction (22) to enable the pressurized tank (9) to be filled.

7. An architecture according to any one of claims 3 to 6, **characterized in that** the pressurized tank (9) is connected to the main supply (51) via a pressure-relief valve (14).

8. An architecture according to any one of claims 3 to 7, **characterized in that** a bleed valve (23) is arranged to enable the pressurized tank (9) to be emptied into the main supply (51) so as to enable the fluid in said tank to be renewed periodically.

9. An architecture according to any one of claims 3 to 8, **characterized in that** the pressurized tank (9) is fitted with a pressure sensor (24).
